# EUROPÄISCHE PATENTSCHRIFT

(11) **EP 0 503 625 B1**
(45) Veröffentlichungstag und Bekanntmachung des Hinweises auf die Patenterteilung: **15.02.1995**
(21) Anmeldenummer: 92104277.6
(22) Anmeldetag: 12.03.1992
(51) Int. Cl.: F16D 69/04

(54) **Reibblock für eine Scheibenbremse**
Friction pad for a disc brake
Plaque de friction pour un frein à disque

(30) Priorität: 15.03.1991 DE 4108444; 14.05.1991 DE 4115614
(43) Veröffentlichungstag der Anmeldung: 16.09.1992
(73) Patentinhaber: Stahl, Otto Kurt, A-8403 Lebring (AT)
(72) Erfinder: Stahl, Otto Kurt, A-8403 Lebring (AT)
(74) Vertreter: Langmaack, Jürgen, Dipl.-Ing.

(56) Entgegenhaltungen:
- EP-A- 0 191 597
- DE-A- 3 832 199
- DE-B- 1 625 680
- DE-C- 2 734 585
- DE-C- 2 935 943

## Beschreibung

Die Erfindung betrifft einen Reibblock für eine Scheibenbremse mit einem plattenförmigen Rückenkörper aus Metall, mit dem ein Reibmaterialblock verbunden ist.

Für Scheibenbremsen an Automobilen bestehen die Reibblöcke aus einer aus Stahlblech von etwa 3 bis 4 mm Dicke ausgestanzten Trägerplatte, auf die das Reibmaterial unter Verwendung eines Haftmittels blockförmig aufgepreßt ist. Die beim Bremsvorgang zwischen Reibbelag und Bremsscheibe wirksam werdende hohe thermische Belastung kann aufgrund der über die Stahlplatte erfolgenden Wärmeabfuhr je nach Zusammensetzung des verwendeten Reibmaterials bei den unterschiedlichsten Lastzuständen zu ungünstigen Einflüssen auf das Bremsverhalten führen. Hinzu kommt noch, daß das Reibmaterial einerseits und die Stahlträgerplatte unterschiedliche Wärmeausdehnungskoeffizienten besitzen, so daß hier bei langgestreckten Reibbelägen Verformungen des Reibbelages unter Temperatureinfluß auftreten können, die zu einem Abheben des Reibblocks von der Bremsscheibe in den Endbereich führen können, die nicht direkt durch den Kolben des Bremszylinders belastet sind. Um die thermischen Nachteile zu beheben, hat man nun versucht, auf die Stahlträgerplatte zunächst eine dünne Schicht eines mit Asbestfasern versetzten Reibmaterials aufzubringen, auf das dann das asbestfreie Reibmaterial aufgepreßt wurde. Hierdurch konnte zwar eine gewisse thermische Isolierung der Stahlträgerplatte gegenüber dem Reibmaterial bewirkt werden. Die Verformungsprobleme werden hierdurch jedoch nicht beseitigt. Ein weiterer Nachteil dieser Lösung besteht vor allem darin, daß bei der Herstellung immer noch mit Asbest gearbeitet werden mußte. Zwischenlagen aus Kunststoffen oder ähnlichen Materialien anstelle einer mit hohem Asbestfaseranteil versetzten Reibmaterialschicht konnten nicht zum Erfolg führen, da diese Materialien sich bei den hohen Temperaturen, die bis zu 800°C erreichen können, keine ausreichende Hitzebeständigkeit aufweisen.

Aus der DE-PS 27 34 585 und DE-PS 29 35 943 ist es nun bekannt, Reibblöcke herzustellen, bei denen anstelle einer Stahlträgerplatte eine Trägerplatte aus einem Hartkeramikformteil eingesetzt wird, die mit einer Metallummantelung, insbesondere einer Druckgußummantelung, versehen ist. Diese Trägerplatten sind unabhängig von der jeweiligen Temperatur absolut steif, so daß der durch den Kolben des Bremszylinders bewirkte Anpreßdruck über die gesamte Fläche des Reibblockes auf die Bremsscheibe ohne Verformung, insbesondere ohne thermische Verformung, übertragen wird und somit immer eine ebenflächige Anlage des Reibmaterials an der Bremsscheibe und damit ein gleichmäßiger Abrieb gewährleistet ist. Derartige Reibblöcke mit einer Trägerplatte aus Hartkeramik sind für thermisch hoch belastete Bremsen, insbesondere Automobilbremsen vorteilhaft. Für Einsatzfälle, bei denen nicht so hohe Bremsleistungen gefordert werden, sind derartige Keramikträgerplatten zwar vorteilhaft, jedoch verhältnismäßig kostspielig.

Für Scheibenbremsen an Schienenfahrzeugen, insbesondere Eisenbahnfahrzeugen, sind die verwendeten Reibblöcke in ihren Abmessungen sehr viel größer. Die maximale Bremskraft ist jedoch im Hinblick auf den Reibbeiwert zwischen Rad und Schiene, der für den normalen Bremsvorgang der Reibpaarung Stahl/Stahl entspricht, begrenzt, so daß hier insgesamt die Belastung geringer ist als bei einem Kraftfahrzeug. Für Schienenfahrzeuge war es daher bisher üblich, die Reibblöcke als massiven Klotz aus Reibmaterial herzustellen, wobei lediglich auf der Rückseite zu Befestigungszwecken ein im Querschnitt schwalbenschwanzförmig gebogenes Metallblechprofil mit eingeformt war. Da diese Reibblöcke eine Dicke zwischen 30 und 40 mm aufweisen, ergibt sich beim Bremsvorgang eine erhebliche Temperaturdifferenz zwischen der an der Bremsscheibe anliegenden Fläche und der der Bremsscheibe abgekehrten Rückenfläche des Reibblockes, so daß hier zwangsläufig aufgrund der unterschiedlichen Längendehnungen Verformungen auftreten. Diese führen zu erhöhter und ungleichmäßiger Abnutzung, so daß die Laufleistung verkürzt ist und ein derart ausgerüsteter Eisenbahnwaggon schon nach entsprechend geringer Kilometerleistung ausrangiert und mit neuen Reibblöcken versehen werden muß.

Der Erfindung liegt nun die Aufgabe zugrunde, für Scheibenbremsen, insbesondere Scheibenbremsen an Schienenfahrzeugen, einen Reibblock zu schaffen, durch den eine höhere Kilometerleistung erzielt und der kostengünstiger hergestellt werden kann.

Diese Aufgabe wird gemäß der Erfindung dadurch gelöst, daß der plattenförmige Rückenkörper aus einem Formteil aus einem Leichtmetall besteht und daß zwischen dem Reibmaterialblock und der diesem zugekehrten Fläche des Formteils eine dünne, im Plasmaspritzverfahren erzeugte Beschichtung aus einem keramischen Material vorgesehen ist. Ein derartiger Reibblock hat den Vorteil, daß insbesondere für Reibblöcke an Schienenfahrzeugen mit einem verhältnismäßig dünnen plattenförmigen Rückenkörper gearbeitet werden kann, so daß unter Berücksichtigung der vorgeschriebenen Gesamtdicke des Reibbelages ein hohes Verschleißvolumen für das Reibmaterial zur Verfügung steht. Die Dicke des plattenförmigen Rückenkörpers entspricht hierbei in etwa der vorgeschriebenen Restdicke für einen derartigen Reibblock, so daß das gleiche Verschleißvolumen bis bisher zur Verfügung steht. Der besondere Vorteil des erfindungsgemäßen Reibblockes besteht jedoch darin, daß die dünne Beschichtung aus keramischen Material als Wärmeisolierung dient und insbesondere zu Beginn des Bremsvorganges eine schnelle Wärmeabfuhr über die Rückenfläche des Reibblockes verhindert. Hierdurch wird erreicht, daß sich das Reibmaterial, das insbesondere bei Reibblöcken für Eisenbahn-Scheibenbremsen eine erhebliche Dicke aufweist, zu Beginn des Bremsvorganges innerhalb kürzester Zeit aufwärmt und praktisch über die gesamte Dicke die gleiche Temperatur annimmt. Überraschend hat sich nun in einer Ausgestaltung der Erfindung gezeigt, daß bei einem Formteil aus Leichtmetall, insbesondere aus einer Aluminium-Druckgußlegierung, sich eine dauerhafte Verbindung mit der keramischen Beschichtung ergibt. Durch das Auftragen im Plasmaspritzverfahren, bei dem das keramischen Material schmelzflüssig, zumindest teigig und mit hoher Temperatur auf die zu beschichtende Oberfläche auftrifft und in das Leichtmetall "einbrennt", ist eine dauerhafte Verbindung zwischen dem keramischen Material und dem Leichtmetall gewährleistet. Die Verbindung zwischen der keramischen Beschichtung und dem Formteil aus Leichtmetall ist hierbei so fest, daß die keramisch beschichtete Fläche in der üblichen Weise vorbehandelt und dann das Reibmaterial aufgepreßt werden kann. Von Vorteil ist hierbei ferner, daß die üblicherweise verwendeten Reibmaterialien und Leichtmetalle, insbesondere Aluminium-Druckgußlegierungen, in etwa den gleichen Wärmeausdehnungskoeffizienten besitzen, so daß hier in Verbindung mit der als thermische Isolierung dienenden keramischen Beschichtung das gefürchtete Abheben der Endkanten im Einlauf- bzw. Auslaufbereich bei großformatigen Reibbelägen, wie sie für Scheibenbremsen an Schienenfahrzeugen Verwendung finden, vermieden wird. Die Herstellung des Formteils in Aluminium-Druckgußtechnik hat den Vorteil, daß praktisch jede gewünschte Formgebung möglich ist, so daß sowohl seitliche Ösen angebracht werden können, wie dies beispielsweise für Scheibenbremsen an Kraftfahrzeugen notwendig ist, oder aber auch im Querschnitt schwalbenschwanzförmige Stege auf der Rückenfläche angeformt werden können, wie sie für Scheibenbremsen an Schienenfahrzeugen üblich sind.

Keramisches Material im Sinne der Erfindung bezieht sich hier insbesondere auf solche Materialien, aus denen dichte Hartkeramiken herstellbar sind, wie sie beispielsweise unter der Bezeichnung Steatit vertrieben werden.

In einer anderen Ausgestaltung der Erfindung ist vorgesehen, daß die keramische Beschichtung auf die dem Formteil zugekehrte Fläche des Reibmaterialblocks aufgespritzt ist. Diese Ausgestaltung ist dann zweckmäßig, wenn thermisch hochbeanspruchbare Reibmaterialien eingesetzt werden sollen, die nicht mehr im üblichen Formpreßverfahren hergestellt werden können, sondern die selbst als Formteile hergestellt werden, wie beispielsweise Sinter-Reibwerkstoffe oder auch CFC-Werkstoffe. In diesen Fällen ist die Temperaturbeständigkeit der Reibwerkstoffe so hoch, daß zum einen das Keramikmaterial aufgespritzt werden kann und zum anderen der Rückenkörper aus Leichtmetall an den Reibmaterialblock angegossen werden kann, beispielsweise im Druckgußverfahren.

In einer weiteren Ausgestaltung der Erfindung ist vorgesehen, daß zwischen dem Reibmaterialblock und der keramischen Beschichtung eine Zwischenschicht aus einem Material mit guter Wärmeleitfähigkeit vorgesehen ist. Dies kann beispielsweise eine dünnes Aluminiumblech sein. Diese Anordnung hat den Vorteil, daß insbesondere bei Scheibenbremsen mit großem Scheibendurchmesser und entsprechend breiten Reibblöcken (in radialer Richtung gemessen) die zwischen dem im Bereich des Innendurchmessers der Bremsscheibe anliegenden Teile und dem im Bereich des Außendurchmessers der Bremsscheibe anliegenden Teil spürbare Temperaturdifferenzen während des Bremsvorganges über das eingelegte Wärmeleitblech sehr viel schneller ausgeglichen wird, so daß der Reibmaterialblock insgesamt innerhalb ganz kurzer Zeit gleichmäßig die optimale Betriebstemperatur erreicht hat. Eine Wärmeabfluß in den Rückenkörper wird durch die keramische Beschichtung verzögert. Erst im Verlauf des Bremsvorganges erfolgt eine Ableitung der entstandenen Wärme durch die keramische Beschichtung in den Rückenkörper nach außen. In einer besonders vorteilhaften Ausgestaltung ist hierbei vorgesehen, daß die Zwischenschicht aus einer unmittelbar auf die keramische Beschichtung aufgespritzten Metallschicht besteht. Überraschend hat sich hierbei gezeigt, daß der gewünschte Temperaturausgleich über die Fläche trotz der geringen Schichtdicke von weniger als 1 mm erfolgt.

In weiterer Ausgestaltung der Erfindung ist vorgesehen, daß anstelle des Aufbringens der keramischen Beschichtung auf den Formkörper oder auf den Reibmaterialblock diese auf wenigstens eine Fläche der Zwischenlage aufgespritzt ist. Diese Anordnung hat erhebliche fertigungstechnische Vorteile, da es wesentlich einfacher ist, ein dünnes, im wesentlichen flaches Blechstück mit der keramischen Beschichtung zu versehen, als einen verhältnismäßig großen und auch schweren Formkörper aus Aluminium oder Reibmaterial.

In vorteilhafter Ausgestaltung der Erfindung ist vorgesehen, daß die mit der Beschichtung zu versehende metallische Oberfläche des Formteils eine rauhe Oberflächenstruktur aufweist. In bevorzugter Ausgestaltung der Erfindung ist hierbei vorgesehen, daß die Rauhtiefe der Oberflächenstruktur maximal 0,6 mm, vorzugsweise bis 0,4 mm beträgt. Diese Ausgestaltung hat den Vorteil, daß die im Plasmastrahl hoch aufgeheizten Keramikpartikel tief in die Metalloberfläche "einbrennen" können und somit die keramische Beschichtung so fest verankert ist, daß sie weder durch Stoßbeanspruchung noch durch die im Betrieb möglichen Biegebeanspruchungen abplatzen kann.

In Ausgestaltung der Erfindung ist ferner vorgesehen, daß die aufgespritzte keramische Beschichtung eine Dicke von 0,05 bis 0,6 mm, vorzugsweise 0,2 bis 0,4 mm aufweist. In überraschender Weise hat sich gezeigt, daß trotz der geringen Dicke der keramischen Beschichtung die wärmeisolierende Wirkung, wie sie beispielsweise für Scheibenbremsen an Schienenfahrzeugen, insbesondere an Eisenbahnfahrzeugen, aber auch an Kraftfahrzeugen oder Krafträdern notwendig ist, ausreicht, um eine einwandfreie Anlage der Reibfläche des Reibbelages an der Reibfläche der Bremsscheiben in allen Phasen des Bremsvorganges zu bewirken, wie sie insbesondere bei wiederholten Bremsungen erforderlich ist.

In weiterer Ausgestaltung der Erfindung ist vorgesehen, daß das Formteil auf seiner beschichteten Seite am Rand mit einem wenigstens über Teilbereiche umlaufenden Steg versehen ist. Durch diesen Steg ist gewährleistet, daß das auf die beschichtete Fläche des Formteils aufgepreßte Reibmaterial formschlüssig gehalten wird. Der Steg am Rand des Formteils kann hierbei über den gesamten Umfang durchgehend sein, oder aber unterbrochen sein, so daß hier mehrere kurze Stege mit dazwischenliegenden Unterbrechungen am Rand vorhanden sind. Damit kann bei aufgepreßten Reibbelägen die Verwendung eines Haftvermittlers entfallen. Damit ergibt sich als weiterer Vorteil, daß abgenutzte Reibblöcke besser entsorgt werden können, da eine einwandfreie leichte Trennung des metallischen Formteils vom Rest des Reibmaterials möglich ist, der dann problemlos, beispielsweise zur Verwendung als Füllmaterial aufgemahlen werden kann. Der umlaufende Rand gewährleistet die geforderte Schersicherheit zwischen Rückenkörper und Reibmaterialblock.

Besonders zweckmäßig ist es hierbei, wenn in weiterer Ausgestaltung der Erfindung der Steg durchgehend umläuft und auf seiner Oberseite einen vorzugsweise nach außen vorspringenden Wulst aufweist. Diese Ausgestaltung hat den Vorteil, daß die formschlüssige Verbindung zwischen Reibmaterialblock einerseits und dem durch den Steg gebildeten schalenförmigen Rückenkörper andererseits auch durch eine Hinterschneidung gebildet wird, so daß der Reibmaterialblock nicht aus dem schalenförmigen Rückenkörper herausfallen kann. Der Wulst erlaubt es, daß der schalenförmige Rückenkörper als einfaches Druckgußteil ohne Hinterschneidungen hergestellt werden kann, da durch einen an den Gußvorgang anschließende einfache Verformung der Wulst nach außen gebogen werden kann, so daß dann die erforderliche Hinterschneidung gebildet ist. Der besondere Vorteil eines nach außen gebogenen, eine randseitige Hinterschneidung bildenden Wulstes besteht darin, daß sich der aufgepreßte Reibbelag infolge der Schrumpfung beim Härten auf dem Rückenkörper "festzieht".

In besonders vorteilhafter Ausgestaltung der Erfindung ist vorgesehen, daß auf dem Steg mit Abstand angeordnete stegförmige Vorsprünge vorgesehen sind, die krallenförmig, vorzugsweise nach außen gebogen sind. Der besondere Vorteil dieser Ausgestaltung besteht darin, daß bei der Herstellung des Formteils im Druckgußverfahren, wie vorstehend für den Wulst beschrieben, die Stege zunächst, bezogen auf die Ebene der Fläche, senkrecht verlaufen und damit einwandfrei ausgeformt werden können. Anschließend werden die Stege in einem zweiten Arbeitsgang umgebogen. Hierbei ist es zweckmäßig, wenn die freie Kante der Stege einseitig angeschrägt ist, so daß durch einen einfachen Druckvorgang das Biegen durchgeführt werden kann.

In einer Ausgestaltung der Erfindung ist für die Anwendung an Eisenbahn-Scheibenbremsen vorgesehen, daß das Formteil auf seiner Rückseite mit einem in der Querschnittskontur in etwa schwalbenschwanzförmigen Befestigungssteg versehen ist. Zweckmäßig ist es hierbei, wenn auf der Vorderseite das Formteil im Bereich des Befestigungssteges mit einer Vertiefung versehen ist. Dies hat den Vorteil, daß das Formteil über die gesamte Fläche die gleiche Materialdicke aufweist, also Materialanhäufungen vermieden werden, die unter Temperatureinfluß zu unterschiedlichen Verformungen führen würden. Ein weiterer Vorteil besteht darin, daß beim Aufpressen des Reibmaterials dieses in die Vertiefung eingepreßt wird und damit eine einwandfreie formschlüssige Verbindung zwischen dem aufgepreßten und ausgehärteten Reibmaterial einerseits und dem Formteil andererseits geschaffen wird, die hohe Scherkräfte zwischen Reibmaterial und Formteil zu übertragen vermag. In vorteilhafter weiterer Ausgestaltung der Erfindung ist an Reibbelägen für Eisenbahn-Scheibenbremsen ferner vorgesehen, daß an der im Einlauf- bzw. Auslaufbereich der zugeordneten Bremsscheibe liegenden Spitze das Formteil eine Durchgangsbohrung aufweist, durch die das Reibmaterial hindurchgepreßt ist. Durch diese Maßnahme wird eine feste, formschlüssige Verbindung zwischen dem Formteil und dem Reibbelag in dem Bereich bewirkt, so daß sich unter dem Temperatureinfluß des Bremsvorganges diese Spitze oder nur sehr wenig von der Bremsscheibe abheben kann und die hierdurch bewirkten Nachteile praktisch vermieden werden.

Die Erfindung wird anhand schematischer Zeichnungen eines Ausführungsbeispieles näher erläutert. Es zeigen:
- Fig. 1: eine Seitenansicht auf einen Teil einer Bremsscheibe einer Eisenbahnbremse und die hierzu gehörige Anordnung mit zwei symmetrisch paarweise angeordneten Reibblöcke auf einer Seite der Bremsscheibe,
- Fig. 2: einen Schnitt durch einen Reibblock gem. Fig. 1 mit aufgepreßtem Reibmaterial,
- Fig. 3: eine Aufsicht auf ein Formteil eines Reibblocks gem. Fig. 2,
- Fig. 4: einen Längsschnitt durch einen Reibblock für eine Automobil-Scheibenbremse,
- Fig. 5: einen Schnitt durch eine andere Ausführungsform eines Reibblocks gem. Fig. 4.

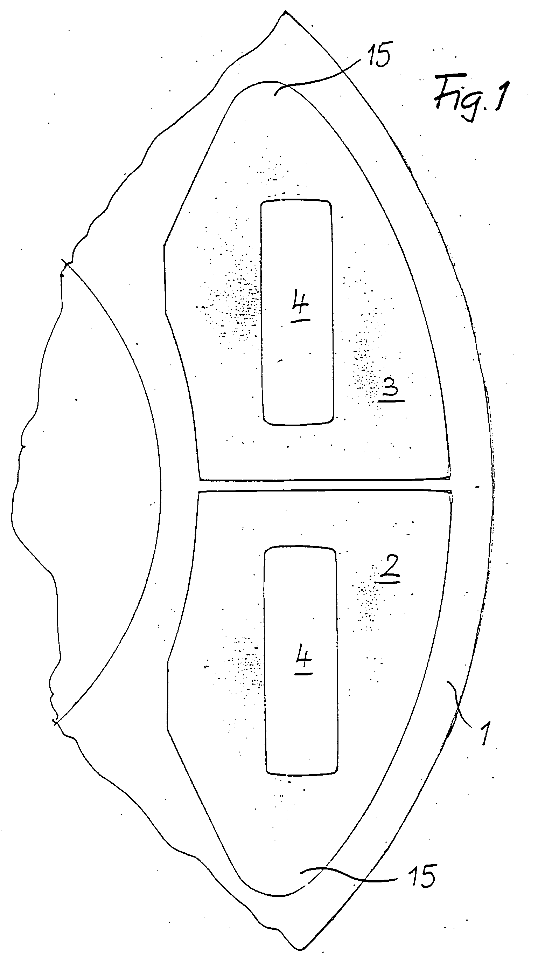

Wie Fig. 1 zeigt, liegen an einer Bremsscheibe 1 auf einer Seitenfläche spiegelbildlich zueinander zwei Reibblöcke 2 und 3, denen auf der anderen Seite der Bremsscheibe 1 in entsprechender Anordnung wiederum zwei Reibblöcke zugeordnet sind, die über die hier nicht näher dargestellten Zange beim Anlegen der Bremse auf die Reibfläche der Bremsscheibe 1 gepreßt werden. Die Reibblöcke 2 und 3 sind jeweils über einen Steg 4, der eine in etwa schwalbenschwanzförmige Kontur aufweist, an der Zange festgelegt.

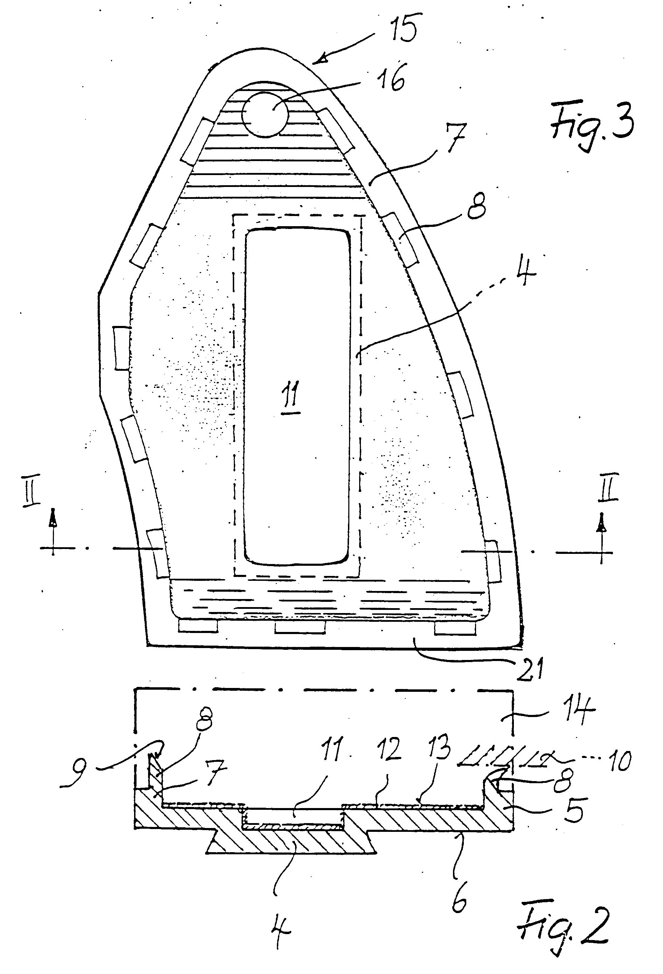

Wie die Schnittdarstellung in Fig. 2 zeigt, bestehen die Reibblöcke 2 und 3 jeweils aus einem Formteil 5, das in Druckgußtechnik aus einer Aluminium-Druckgußlegierung hergestellt ist. Der Steg 4 mit seinem schwalbenschwanzförmigen Querschnitt ist hierbei an der Rückseite 6 des Formteils 5 angeformt. Bei dem dargestellten Ausführungsbeispiel ist das Formteil am Rand mit einem durchgehenden, umlaufenden Steg 7 versehen, der an seinem innenliegenden Rand sich in zusätzliche, stegförmige Vorsprünge 8 fortsetzt. Die stegförmigen Vorsprünge 8 sind auf ihrer stirnseitigen Außenfläche 9 nach außen hin abgeschrägt. Die linke Zeichnungsseite zeigt die Form der stegförmigen Vorsprünge 8 nach dem Auslösen aus der Druckgußform. Auf der rechten Seite der Zeichnung ist die Form der stegförmigen Vorsprünge 8 dargestellt, nachdem diese durch einen zusätzlichen Verformungsprozeß, beispielsweise durch Aufdrücken einer Druckplatte 10 nach außen krallenartig gebogen sind.

Die Abschrägung der Stirnfläche 9 wird somit immer auf der der Einbiegerichtung abgekehrten Seite angeordnet. Anstelle der in Fig. 2 dargestellten Ausführungsform, bei der ein durchlaufender Randsteg 7 und darauf aufgesetzte stegförmige Vorsprünge 8 vorgesehen sind, ist es auch möglich, den durchlaufenden Rand ganz oder teilweise wegzulassen und nur stegförmige Vorsprünge 8 im Randbereich anzuordnen. In Abwandlung ist es ferner möglich, statt mit Abstand zueinander angeordneter stegförmiger Vorsprünge auf dem Steg 7 einen durchgehenden hochstehenden Wulst vorzusehen, der durch einen entsprechenden Umformvorgang umgebogen wird.

Im Bereich des auf der Rückseite 6 angeordneten Befestigungssteges 4 ist im Formteil eine im wesentlichen rechteckige Ausnehmung 11 eingeformt, die so bemessen ist, daß das Formteil durchgehend in etwa die gleiche Materialdicke aufweist.

Die Vorderfläche 12 des Formteils 5 wird entweder bereits beim Druckgußvorgang oder durch einen zusätzlichen Bearbeitungsschritt mit einer rauhen Oberflächenstruktur versehen, die eine Rauhtiefe von maximal 0,6 mm, vorzugsweise höchsten der Dicke der aufzubringenden keramischen Beschichtung beträgt. Auf die Vorderfläche 12 wird dann im Plasmaspritzverfahren eine keramische Beschichtung 13 mit einer Dicke von etwa 0,2 bis 0,3 mm aufgebracht, wobei die heiß aufgespritzten Keramikpartikel aufgrund der rauhen Oberflächenstruktur in das Druckgußaluminium "einbrennen" können und hierbei eine dichte, praktisch abriebfeste und auch bei Stoß- und Biegebeanspruchungen nicht abplatzende Beschichtung ergeben. Die keramische Beschichtung 13 erstreckt sich bis in die Vertiefung 11.

Auf das so vorbehandelte Formteil 5 kann dann ohne die übliche Vorbehandlung der Oberfläche durch einen Primer und/oder Kleber das Reibmaterial 14, hier durch die dicke strichpunktierte Linie dargestellt, unmittelbar aufgepreßt werden. Das Reibmaterial wird anschließend ausgehärtet.

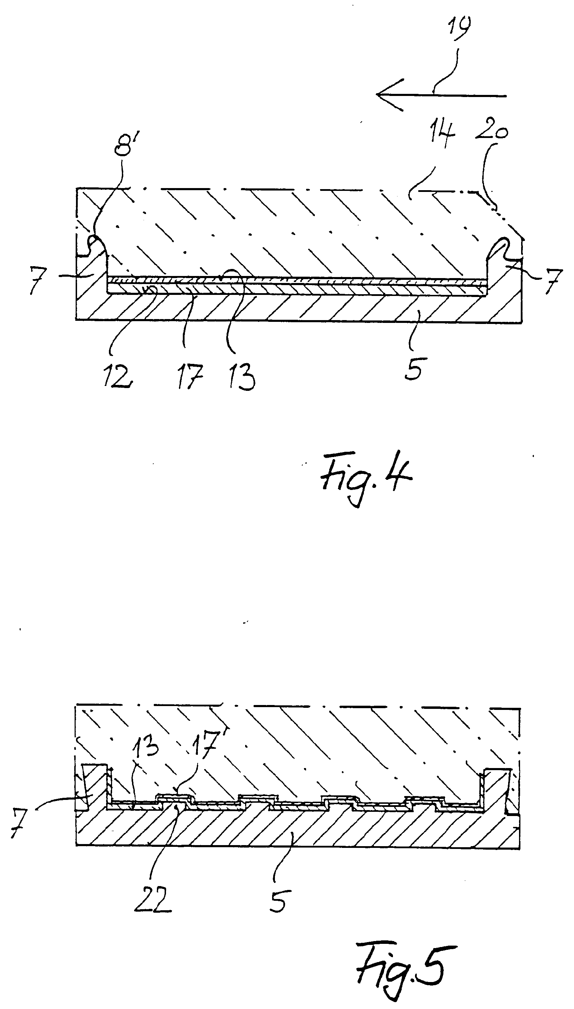

Die Aufsicht in Fig. 3 auf das Formteil 5 zeigt dieses vor dem Aufpressen des Reibmaterials und läßt die Anordnung der stegförmigen Vorsprünge 8 (vor dem oben geschilderten Biegevorgang) erkennen. Das Formteil 5 ist an seiner Spitze 15, die je nach Drehrichtung der Bremsscheibe 1 die Einlauf- bzw. Auslaufkante definiert (vgl. Fig. 1), mit einer durchgehenden Ausnehmung 16 versehen, durch die beim Aufpressen das Reibmaterial hindurchgepreßt wird, so daß zusätzliche zu der Verankerung durch die stegförmigen Vorsprünge 8 hier eine formschlüssige Verbindung zwischen Reibmaterial und Formteil geschaffen und somit ein Abheben unter Temperatureinfluß während des Bremsvorganges in diesem kritischen Bereich vermieden ist. Im Bereich der Ausnehmung 16 kann das Formteil 5 eine größere Materialdicke als in den übrigen Bereichen aufweisen. Zweckmäßig ist es, wenn die Materialstärke vom Ende der Vertiefung ausgehend zur Spitze 15 hin in dem schraffierten Bereich bis etwa auf die Höhe des Steges 7 zunimmt. Hierdurch wird in diesem Bereich eine höhere Belastbarkeit erreicht. Ebenso ist es zweckmäßig, daß an dem der Spitze 15 gegenüberliegenden Rand 21 in dem schraffierten Bereich die Materialdicke des Formteils zum Steg 7 hin zunimmt.

In Fig. 4 ist in einem Längsschnitt, d.h. in Umfangsrichtung einer Bremsscheibe gesehen, eine Ausführungsform für einen Reibblock für eine Kraftfahrzeug-Scheibenbremse dargestellt. Abgesehen davon, daß die Bremszange an Kraftfahrzeug-Scheibenbremsen hinsichtlich der Befestigung der Reibblöcke anders aufgebaut ist und im Hinblick auf die kleineren Abmessungen die Reibblöcke im Grundriß eine andere Form aufweisen, als die vorstehend beschriebenen Reibblöcke für Schienenbremsen, ist der grundlegende Aufbau eines Kraft fahrzeug-Reibblocks gem. der vorliegenden Erfindung identisch mit dem anhand von Fig. 2 beschriebenen Aufbau des Reibblocks für Schienenbremsen. Gleiche Teile sind somit mit gleichen Bezugszeichen gekennzeichnet.

Auch hier ist wieder als Rückenkörper ein Formteil 5 aus Leichtmetall vorgesehen, das einen umlaufenden Steg 7 aufweist, so daß das Formteil einen flachen Napf bildet, in den das Reibmaterial 14 blockförmig eingepreßt wird. Der Steg 7 bildet hier eine außen umlaufende Hinterschneidung, die vom Reibmaterial umpreßt wird. Diese Gestaltung des Steges 7 kann entsprechend auch bei den Ausführungsformen für Reibblöcke an Schienenfahrzeugen vorgesehen werden. Auch für die Reibblöcke von Kraftfahrzeug-Scheibenbremsen kann, wie vorstehend angegeben, auf die Vorderfläche 12 eine keramische Beschichtung in gleicher Weise, wie zuvor beschrieben, unmittelbar aufgespritzt werden.

Anhand von Fig. 4 wird jedoch noch eine weitere Ausgestaltung dargelegt. Anstelle eine unmittelbar auf das Formteil 5 aufgespritzten keramischen Beschichtung ist hier eine Zwischenlage 17 aus Metall, beispielsweise ebenfalls aus Leichtmetall eingelegt, die auf ihrer dem Reibmaterial zugekehrten Oberfläche 18 mit einer entsprechenden keramischen Beschichtung 13, wie zuvor beschrieben, versehen ist. Diese Ausgestaltung erlaubt es, die keramische Beschichtung beispielsweise auf ein Bandmaterial aufzubringen, aus dem dann die Zwischenlage in der geforderten Form ausgestanzt wird. Hierdurch wird das Verfahren zur Aufbringung einer keramischen Beschichtung vereinfacht, so daß nur noch die vorbereiteten Stanzlinge in das Formteil 5 eingelegt werden müssen, bevor das Reibmaterial aufgepreßt wird. Dieser Vorgang kann in einfacher Weise mechanisiert werden.

Bei dem dargestellten Ausführungsbeispiel ist noch eine weitere Abwandlung vorgesehen. Insbesondere bei Scheibenbremsen mit großem Scheibendurchmesser kann sich die Durchmesserdifferenz zwischen dem äußeren Durchmesserbereich der Scheibe und dem inneren Durchmesserbereich der Scheibe in einem spürbaren Temperaturgradienten in radialer Richtung, bezogen auf die Bremsscheibe, bemerkbar machen, der aufgrund der Temperaturabhängigkeit des Reibwertes der üblichen Reibmaterialien zu nachteiligten Beeinflussungen des Reibverhaltens, insbesondere aber hinsichtlich des Betriebsverschleisses, führen kann. Um dies zu vermeiden, kann die bereits mit einer keramischen Beschichtung 13 versehene Zwischenlage 17 so in das Formteil 5 eingelegt werden, daß die keramische Beschichtung sich auf der dem Reibmaterial abgewandten Fläche befindet, so daß bei der Verwendung eines Material mit guter Wärmeleitfähigkeit für die Zwischenlage auf der Rückenfläche des Reibmaterialblocks über die Zwischenlage ein schneller Temperaturausgleich zwischen unterschiedlich erhitzten Bereichen möglich ist.

Bei einer Ausführung, bei der die keramische Beschichtung unmittelbar auf die Oberfläche 12 des Formteils aufgebracht ist, wird hier entweder eine unbeschichtete Zwischenlage aus einem Material mit guter Wärmeleitfähigkeit, beispielsweise aus Metall, eingelegt. Dies kann sowohl bei glattflächigen Formteilen, wie in Fig. 4 dargestellt, vorgenommen werden, als auch bei Formteilen mit Vertiefungen, wie sie die Ausführungsform gem. Fig. 2 zeigt. Im Falle einer Ausführungsform entsprechend Fig. 2 muß jedoch die Zwischenlage durch einen einfachen Prägevorgang entsprechend der Konturierung der Oberfläche 12 des Formteils 5 vorgeformt sein. Statt einer gesonderte eingelegten wärmeleitenden Zwischenlage kann auch ein Metall, beispielsweise eine Leichtmetall, insbesondere ein Aluminium, unmittelbar auf die keramische Beschichtung in einer Schicht aufgespritzt werden, wie in Fig. 5 dargestellt.

Wie die Schnittdarstellung gem. Fig. 4 erkennen läßt, ist auch bei den Ausführungsformen für Kraftfahrzeug-Scheibenbremsen die Verbindung zwischen dem Formteil 5 und dem Reibmaterialblock 14 formschlüssig gestaltet, da auch hier auf dem Steg 7 ein stegförmiger Vorsprung 8' vorgesehen ist, der hier über den Umfang durchlaufend ausgebildet ist, und der krallenartig nach außen gerichtet ist. Dies kann durch den zuvor beschriebenen Biegevorgang geformt werden. Da die Hinterschneidung außen umläuft, ist die Herstellung auch bereits beim Gießvorgang möglich. Damit erübrigt sich das Aufbringen eines Haftvermittlers vor dem Aufpressen des Reibmaterials. Die formschlüssige Verbindung zwischen dem Reibmaterialblock einerseits und dem Formteil andererseits in Umfangsrichtung wird hierbei durch den umlaufenden Steg 7 gewährleistet, so daß der krallenartig gebogene Steg 8' lediglich die Sicherung der Reibmaterialblocks senkrecht zur Oberfläche 12 zu übernehmen hat, so daß der stegförmige Vorsprung 8′ nur um ein geringes Maß gebogen zu sein braucht. Da über den umlaufenden Steg 7 am Rand des Formteils 5 ein großer Scherquerschnitt geschaffen ist, kann man bei einer derartigen Ausführungsform auch auf die sonst üblichen Durchgangslöcher im Rückenbereich des Trägerkörpers verzichten, durch den bei den herkömmlichen Reibblöcken Reibmaterial mit hindurchgepreßt ist. Dies hat den Vorteil, daß in bezug auf die Wärmedehnung des Reibmaterials in Richtung auf die Bremsscheibe, d.h. also senkrecht zur Fläche 12 über die gesamte Anlagefläche des Reibblocks an der Bremsscheibe gleiche Materialdicken gegeben sind und somit auch ein gleichmäßiger Abrieb des Reibmaterials über die Fläche gegeben ist. Da Reibblöcke für Kraftfahrzeug-Scheibenbremsen eine im wesentlichen sich radial über die ganze Breite der Kreisringfläche der Bremsscheibe erstreckende Kante aufweisen, ist es zur Verbesserung der Betriebsbedingungen zweckmäßig, wenn, wie in Fig. 4 ebenfalls dargestellt, die durch die Drehrichtung der Bremsscheibe im Normalbetrieb (Pfeil 19) definierte Einlaufkante am Reibblock mit einer Anfasung (20) versehen ist.

Wie Fig. 5 zeigt, erlaubt die Möglichkeit der Beschichtung durch Aufspritzen, und zwar sowohl der keramischen Beschichtung 13 als auch der wärmeleitenden metallischen Beschichtung 17′, auch die Anordnung von Versteifungsrippen 22 am Formteil 5. Der Verlauf und die Höhe kann auf die Lage der Druckkolben der Bremszange abgestellt werden, so daß eine gleichmäßige Druckverteilung gewährleistet ist. Dies kann beispielsweise durch eine gitterförmige und/oder strahlenförmige Struktur der Versteifungsrippen 22 erfolgen.

## Patentansprüche

1. Reibblock für eine Scheibenbremse mit einem plattenförmigen Rückenkörper aus Metall, mit dem ein Reibmaterialblock verbunden ist, **dadurch gekennzeichnet**, daß der plattenförmige Rückenkörper aus einem Formteil (5) aus einem Leichtmetall besteht, und daß zwischen dem Reibmaterialblock (14) und der diesem zugekehrten Fläche (12) des Formteils (5) eine dünne, im Plasma-Spritzverfahren erzeugte Beschichtung (13) aus einem keramischen Material vorgesehen ist.

2. Reibblock nach Anspruch 1, dadurch gekennzeichnet, daß die keramisch Beschichtung (13) auf die dem Reibmaterialblock (14) zugekehrte Fläche (12) des Formteils (5) aufgespritzt ist.

3. Reibblock nach Anspruch 1, dadurch gekennzeichnet, daß die keramische Beschichtung (13) auf die dem Formteil (5) zugekehrte Fläche des Reibmaterialblocks (14) aufgespritzt ist.

4. Reibblock nach Anspruch 1 oder 2, dadurch gekennzeichnet, daß zwischen dem Reibmaterialblock (14) und der keramischen Beschichtung (13) eine Zwischenschicht (17) aus einem Material mit guter Wärmeleitfähigkeit vorgesehen ist.

5. Reibblock nach einem der Ansprüche 1 bis 4, dadurch gekennzeichnet, daß die wärmeleitende Zwischenschicht (17) aus einem Metall besteht, das auf die keramische Beschichtung aufgespritzt ist.

6. Reibblock nach einem der Ansprüche 1 bis 4, dadurch gekennzeichnet, daß die wärmeleitende Zwischenschicht (17) aus einer Blecheinlage besteht.

7. Reibblock nach einem der Ansprüche 1 bis 6, dadurch gekennzeichnet, daß die keramische Beschichtung (13) auf wenigstens eine Fläche der Zwischenlage aufgespritzt ist.

8. Reibblock nach einem der Ansprüche 1 bis 7, dadurch gekennzeichnet, daß die mit der keramischen Beschichtung (13) zu versehende metallische Oberfläche (12) des Formteils (5) eine rauhe Oberflächenstruktur aufweist.

9. Reibblock nach einem der Ansprüche 1 bis 8, dadurch gekennzeichnet, daß die Rauhtiefe der Oberflächenstruktur maximal der Dicke der keramischen Beschichtung (13) entspricht, vorzugsweise bis 0,4 mm beträgt.

10. Reibblock nach einem der Ansprüche 1 bis 9, dadurch gekennzeichnet, daß die aufgespritzte keramische Materialschicht (13) eine Dicke von 0,05 bis 0,6 mm, vorzugsweise 0,2 bis 0,4 mm aufweist.

11. Reibblock nach einem der Ansprüche 1 bis 10, dadurch gekennzeichnet, daß das Formteil (5) auf seiner beschichteten Seite (12) am Rand mit einem wenigstens über Teilbereiche umlaufenden Steg (7) versehen ist.

12. Reibblock nach einem der Ansprüche 1 bis 11, dadurch gekennzeichnet, daß der Steg (7) durchgehend umläuft und auf seiner Oberseite einen vorzugsweise nach außen vorspringenden Wulst aufweist.

13. Reibblock nach einem der Ansprüche 1 bis 12, dadurch gekennzeichnet, daß auf dem Steg (7) mit Abstand zueinander angeordnete stegförmige Vorsprüngen (8) vorgesehen sind, die krallenartig, vorzugsweise nach außen gebogen sind.

14. Reibblock nach einem der Ansprüche 1 bis 13, für Eisenbahn-Scheibenbremsen, dadurch gekennzeichnet, daß das Formteil (5) auf seiner dem Reibmaterialblock abgewandten Rückseite mit einem im Querschnitt in etwa schwalbenschwanzförmigen Befestigungssteg (4) versehen ist.

15. Reibblock nach einem der Ansprüche 1 bis 14, dadurch gekennzeichnet, daß das Formteil (5) auf seiner Vorderseite im Bereich des Befestigungssteges (4) mit einer diesem in etwa entsprechenden Vertiefung (11) versehen ist.

16. Reibblock nach einem der Ansprüche 1 bis 15, dadurch gekennzeichnet, daß an der im Einlauf- bzw. Auslaufbereich der zugehörigen Bremsscheibe (1) liegenden Spitze (15) das Formteil (5) eine Durchgangsbohrung (16) aufweist, durch die das Reibmaterial hindurchgepreßt ist.

17. Reibblock nach einem der Ansprüche 1 bis 16, dadurch gekennzeichnet, daß im Bereich der Spitze (15) die beschichtete Fläche bis in etwa auf die Höhe des umlaufenden Steges (7) ansteigend ausgebildet ist.

18. Reibblock nach einem der Ansprüche 1 bis 17, dadurch gekennzeichnet, daß im Bereich der der Spitze (15) abgekehrten Kante die beschichtete Fläche bis in etwa auf die Höhe des umlaufenden Steges (7) ansteigend ausgebildet ist.

19. Reibblock nach einem der Ansprüche 1 bis 18, dadurch gekennzeichnet, daß die vom Steg (7) umfaßte Innenfläche des Formteils (5) mit Versteifungsrippen (22) versehen ist.

## Claims

1. A friction block for a disc brake having a plate-shaped metal back member, to which a friction material block is joined, characterised in that the plate-shaped back member consists of a shaped part (5) made of a light metal, and that a thin coating (13) of a ceramic material, produced in a plasma-spraying process, is provided between the friction material block (14) and the surface (12) of the shaped part (5) facing it.

2. A friction block according to Claim 1, characterised in that the ceramic coating (13) is sprayed on to the surface (12) of the shaped part (5) which faces the friction material block (14).

3. A friction block according to Claim 1, characterised in that the ceramic coating (13) is sprayed on to the surface of the friction material block (14) which faces the shaped part (5).

4. A friction block according to Claim 1 or 2, characterised in that an intermediate layer (17) of a material having good heat conductivity is provided between the friction material block (14) and the ceramic coating (13).

5. A friction block according to one of Claims 1 to 4, characterised in that the heat-conductive intermediate layer (17) consists of a metal which is sprayed on to the ceramic coating.

6. A friction block according to one of Claims 1 to 4, characterised in that the heat-conductive intermediate layer (17) consists of a sheet-metal insert.

7. A friction block according to one of Claims 1 to 6, characterised in that the ceramic coating (13) is sprayed on to at least one surface of the intermediate layer.

8. A friction block according to one of Claims 1 to 7, characterised in that the metal surface (12) of the shaped part (5) which is to be provided with the ceramic coating (13) has a rough surface structure.

9. A friction block according to one of Claims 1 to 8, characterised in that the surface roughness of the surface structure corresponds at most to the thickness of the ceramic coating (13), preferably is up to 0.4 mm.

10. A friction block according to one of Claims 1 to 9, characterised in that the sprayed-on ceramic material layer (13) has a thickness of 0.05 to 0.6 mm, preferably 0.2 to 0.4 mm.

11. A friction block according to one of Claims 1 to 10, characterised in that the shaped part (5) is provided on its coated side (12) on the edge with a bar (7) which is circumambient at least over partial regions.

12. A friction block according to one of Claims 1 to 11, characterised in that the bar (7) is circumambient continuously and has on its upper side a bead which preferably projects outward.

13. A friction block according to one of Claims 1 to 12, characterised in that spaced-apart bar-shaped projections (8) are provided on the bar (7), which projections are bent in a claw-shape, preferably outwards.

14. A friction block according to one of Claims 1 to 13, for disc brakes for railway vehicles, characterised in that the shaped part (5) is provided on its rear side remote from the friction material block with an attachment bar (4) which is approximately dovetailed in cross-section.

15. A friction block according to one of Claims 1 to 14, characterised in that the shaped part (5) is provided on its front side in the region of the attachment bar (4) with a recess (11) which corresponds approximately thereto.

16. A friction block according to one of Claims 1 to 15, characterised in that on the tip (15) located in the entry or exit region of the associated brake disc (1) the shaped part (5) has a through bore (16), through which the friction material is pressed.

17. A friction block according to one of Claims 1 to 16, characterised in that in the region of the tip (15) the coated surface is designed to rise to approximately the height of the circumambient bar (7).

18. A friction block according to one of Claims 1 to 17, characterised in that in the region of the edge remote from the tip (15) the coated surface is designed to rise to approximately the height of the circumambient bar (7).

19. A friction block according to one of Claims 1 to 18, characterised in that the inner surface of the shaped part (5) encompassed by the bar (7) is provided with stiffening ribs (22).

## Revendications

1. Plaque de friction pour un frein à disque, avec un élément de dos en forme de plaque en métal avec lequel est assemblée une plaque de matériau de friction, caractérisée par le fait que l'élément de dos en forme de plaque consiste en une pièce moulée (5) en métal léger et qu'entre la plaque de matériau de friction (14) et la face (12) de la pièce moulée (5) orientée vers cette dernière est prévu un mince revêtement (13) en un matériau céramique réalisé par procédé de pulvérisation au plasma.

2. Plaque de friction selon la revendication 1, caractérisée par le fait que le revêtement céramique (13) est appliqué par pulvérisation sur la face (12) de la pièce moulée (5) orientée vers la plaque de matériau de friction (14).

3. Plaque de friction selon la revendication 1, caractérisée par le fait que le revêtement céramique (13) est appliqué par pulvérisation sur la face de la plaque de matériau de friction (14) orientée vers la pièce moulée (5).

4. Plaque de friction selon la revendication 1 ou 2, caractérisée par le fait qu'entre la plaque de matériau de friction (14) et le revêtement céramique (13) est prévue une couche intermédiaire (17) en un matériau à bonne conductivité thermique.

5. Plaque de friction selon l'une des revendications 1 à 4, caractérisée par le fait que la couche intermédiaire (17) thermoconductrice est en un matériau qui est appliqué par pulvérisation sur le revêtement céramique.

6. Plaque de friction selon l'une des revendications 1 à 4, caractérisée par le fait que la couche intermédiaire (17) thermoconductrice consiste en un insert en tôle.

7. Plaque de friction selon l'une des revendications 1 à 6, caractérisée par le fait que le revêtement céramique (13) est appliqué par pulvérisation sur au moins une face de la couche intermédiaire.

8. Plaque de friction selon l'une des revendications 1 à 7, caractérisée par le fait que la surface métallique (12) de la pièce moulée (5) à pourvoir du revêtement céramique (13) présente une structure de surface rugueuse.

9. Plaque de friction selon l'une des revendications 1 à 8, caractérisée par le fait que la profondeur de rugosité de la structure de surface correspond au maximum à l'épaisseur du revêtement céramique (13) et est, de préférence, de jusqu'à 0,4 mm.

10. Plaque de friction selon l'une des revendications 1 à 9, caractérisée par le fait que la couche de matériau céramique (13) appliquée par pulvérisation présente une épaisseur de 0,05 à 0,6 mm, de préférence de 0,2 à 0,4 mm.

11. Plaque de friction selon l'une des revendications 1 à 10, caractérisée par le fait que la pièce moulée (5) est pourvue sur sa face revêtue (12), sur le bord, d'une nervure (7) périphérique s'étendant au moins sur des zones partielles.

12. Plaque de friction selon l'une des revendications 1 à 11, caractérisée par le fait que la nervure (7) périphérique s'étend en continu et présente, sur sa face supérieure, un renflement, de préférence, en saillie vers l'extérieur.

13. Plaque de friction selon l'une des revendications 1 à 12, caractérisée par le fait que sur la nervure (7) sont prévues des saillies (8) en forme d'arête, disposées à distance l'une de l'autre, qui sont recourbées en forme de griffes, de préférence, vers l'extérieur.

14. Plaque de friction selon l'une des revendications 1 à 13, pour frein à disque de chemin de fer, caractérisée par le fait que la pièce moulée (5) est pourvue, sur sa face arrière opposée à la plaque de matériau de friction, d'un talon de fixation (4) à section environ en forme de queue d'aronde.

15. Plaque de friction selon l'une des revendications 1 à 14, caractérisée par le fait que la pièce moulée (5) est pourvue, sur sa face avant, à l'endroit du talon de fixation (4), d'un creux (11) correspondant environ à ce dernier.

16. Plaque de friction selon l'une des revendications 1 à 15, caractérisée par le fait que la pièce moulée (5) présente, à la pointe (15) située dans la zone d'entrée ou de sortie, respectivement, du disque de frein (1) associé, un alésage de passage (16) à travers lequel est pressé le matériau de friction.

17. Plaque de friction selon l'une des revendications 1 à 16, caractérisée par le fait que la face revêtue se présente, à l'endroit de la pointe (15), de forme montante jusqu'à environ la hauteur de la nervure périphérique (7).

18. Plaque de friction selon l'une des revendications 1 à 17, caractérisée par le fait que la face revêtue se présente, à l'endroit du bord opposé à la pointe (15), de forme montante jusqu'à environ la hauteur de la nervure périphérique (7).

19. Plaque de friction selon l'une des revendications 1 à 18, caractérisée par le fait que la face intérieure de la pièce moulée (5) entourée par la nervure (7) est pourvue de nervures de rigidification (22).
